# EUROPEAN PATENT APPLICATION

(11) **EP 4 736 700 A1**
(43) Date of publication of application: **06.05.2026**
(21) Application number: 24210803.3
(22) Date of filing: 05.11.2024
(51) Int. Cl.: A43B 13/12, A43B 13/18, B29D 35/06, B29D 35/08, B29D 35/12, B29D 35/14, B33Y 80/00

(54) **SHOE COMPONENT CO-MOLDED WITH PHYSICALLY FOAMED MIDSOLE AND METHOD OF MANUFACTURING THE SAME**

(71) Applicant: Feng Tay Enterprises Co., Ltd., Douliu City, Yunlin County 640111 (TW)
(72) Inventor: YANG, Tsung-Lin, 640103 Douliou City, Yunlin County (TW); CHANG, Yu-Ta, 523007 Pitou Township, Changhua County (TW)
(74) Representative: van Dam, Vincent

(57) **Abstract**

A shoe component (100, 200, 300) co-molded with a physically foamed midsole includes a composite outsole (10, 40, 50) and a physically foamed midsole (20). The composite outsole (10, 40, 50) includes a base layer (11, 41, 51) and a mesh layer (12, 42, 52) having has a first surface (121, 421, 5231) and a second surface (122, 422, 5211) that face oppositely. The first surface (121, 421, 5231) has a first surface structure (123, 423, 5232) and is engaged with the base layer (11, 41, 51). The second surface (122, 422, 5211) has a second surface structure (124, 424, 5212) different from the first surface structure (123, 423, 5232). A bottom surface of the physically foamed midsole (20) partially enters the second surface structure (124, 424, 5212) to generate an anchor effect with the mesh layer (12, 42, 52). A method of manufacturing a shoe component (100, 200, 300) is provided.

## Description

### BACKGROUND OF THE INVENTION

### Technical Field

The present invention relates generally to a shoe component structure and a manufacturing technology, and more particularly to a shoe component co-molded with a physically foamed midsole and a method of manufacturing the same.

### Description of Related Art

A conventional shoe basically includes a sole, an upper, an insole, etc. The sole is typically composed of an outsole and a midsole. In a conventional method of manufacturing shoes, the upper, the midsole, the outsole, and other components are manufactured individually; complicated roughing treatment is performed on a surface of the upper, a surface of the midsole, and a surface of the outsole in a manual way; an adhesive is coated on the roughed surface of the upper, the roughed surface of the midsole, and the roughed surface of the outsole; then the upper and the outsole are adhered to two opposite sides of the midsole to form a shoe product.

However, the conventional method of manufacturing shoes includes complicated processing procedures and requires massive manpower cost in roughing, applying the adhesive, adhering, and other processing procedures, which lower the overall production efficiency. Moreover, the chemical adhesive used in applying the adhesive has a certain degree of poison and causes harms to health when workers are exposed to the chemical adhesive in long term. Additionally, when a foamed midsole of the conventional shoe is adhered to the outsole through the adhesive, a quality and a composition of the adhesive affect an adhesion effect and an adhesion strength between the foamed midsole and the outsole. If a peel strength and the adhesion effect between the foamed midsole and the outsole are not satisfactory, the foamed midsole and the outsole might be easily detached from each other and cause injury if a user performs a high-intensity exercise for a long time while wearing the sole.

A conventional midsole typically is a chemically foamed body. Before the foamed midsole is adhered to the outsole or the upper, the foamed midsole is placed in an oven for solidifying. During solidifying, the size constriction rate of the foamed midsole might become unstable easily, which might cause different toe springs across the foamed midsole. As a result, when the foamed midsole is adhered to the outsole or the upper in the subsequent processing procedures, mismatching of the sizes might be easily resulted and excessive adhesive might be present at an adhesion between the foamed midsole and the outsole or the upper, which increase the defect rate of the method of manufacturing shoes. Moreover, a chemically foamed midsole is typically made by performing injection foaming with a reduced mold which is reduced significantly in terms of scale based on an end product. After the injection and at a moment of opening the reduced mold, an intermediate in the reduced mold suddenly expands to a foamed body with a volume, which is a multiple of a volume of the reduced mold, duo to different pressures. Then, the foamed body is processed upon requirements. As the injection chemical foaming involves special volume changes, the chemically foamed midsole could not be co-molded with other shoe components during the midsole injection process. For example, if the chemically foamed midsole is required to be co-molded with the outsole, the chemically foamed midsole is taken out after opening the mold; then, the chemically foamed midsole is processed preliminarily and then is co-molded with the outsole or other shoe components under high temperature and high pressure.

Recently, the midsole could be manufactured by injection physical foaming, wherein the physically foamed midsole does not require a reduced mold, as is necessary for the chemically foamed midsole. The physically foamed midsole could be manufactured by performing injection physical foaming on a mold cavity having the same size as the end product of the foamed midsole. Although the physically foamed midsole could be co-molded with other shoe components, an adhesion strength of a resulted product might not meet the standard requirement. The reason is that temperature and pressure during injection physical foaming are not sufficient for good adhesion between the physically foamed midsole and other shoe components placed in the mold cavity. As a result, although the physically foamed midsole could be co-molded with other shoe components, the adhesion strength between different shoe components, including an adhesion strength between the physically foamed midsole and an outsole formed by co-molding, still has room for improvement.

### BRIEF SUMMARY OF THE INVENTION

In view of the above, the primary objective of the present invention is to provide a shoe component co-molded with a physically foamed midsole and a method of manufacturing the same, wherein the shoe component is engaged with other shoe components through physical anchor effect to improve an engaging strength between an outsole and the physically foamed midsole and avoiding processes of applying an adhesive and outsole-attaching; the physically foamed midsole does not require solidifying in an oven, thereby saving manpower cost and improving the production efficiency.

The present invention provides a shoe component co-molded with a physically foamed midsole including a composite outsole and a physically foamed midsole. The composite outsole includes a base layer and a mesh layer co-molded with the base layer. The base layer has a first top surface and a first bottom surface. The first bottom surface is adapted to contact a ground. The mesh layer has a first surface and a second surface that face opposite directions. The first surface has a first surface structure. The second surface has a second surface structure. The first surface structure is different from the second surface structure. The first surface is engaged with the first top surface of the base layer. The physically foamed midsole is formed from a supercritical fluid through physical foaming. The physically foamed midsole has a second top surface and a second bottom surface. A part of the second bottom surface enters the second surface structure of the second surface to generate an anchor effect with the mesh layer.

The present invention further provides a method of manufacturing a shoe component co-molded with a physically foamed midsole, including:
step S1: providing a composite outsole, wherein a mesh layer of the composite outsole has a first surface and a second surface that face opposite directions; the first surface has a first surface structure; the second surface has a second surface structure; the first surface structure is different from the second surface structure; a base layer of the composite outsole is engaged with the first surface by co-molding.
step S2: placing the composite outsole into a foaming mold and reserving a foaming space; injecting a thermoplastic foaming fluid, which includes a supercritical fluid, into the foaming space of the foaming mold.
step S3: foaming the thermoplastic foaming fluid in the foaming mold through the supercritical fluid to form a physically foamed midsole, wherein a part of the physically foamed midsole enters the second surface structure of the second surface of the mesh layer to generate an anchor effect with the mesh layer, thereby obtaining a shoe component.

With the second surface structure of the mesh layer of the composite outsole of the shoe component co-molded with the physically foamed midsole, the part of the physically foamed midsole fits into the second surface structure of the mesh layer to generate the anchor effect to be engaged with the composite outsole, and no adhesive layer is provided between the physically foamed midsole and the mesh layer, thereby enhancing the engagement between the composite outsole and the physically foamed midsole and achieving the stable attachment.

Moreover, the method of manufacturing the shoe component co-molded with the physically foamed midsole omits processing procedures including surface roughing, applying the adhesive, and outsole-attaching. The physically foamed midsole is formed by supercritical fluid through physical foaming, so that the midsole with a stable size could be obtained after opening the mold and could be directly used for subsequent procedures, thereby omitting the procedure of solidifying in an oven as required for the conventional chemically foamed midsole. In this way, compared to the conventional method of manufacturing shoes, the method of manufacturing the shoe component co-molded with the physically foamed midsole could improve the production efficiency, avoid the procedure of applying the adhesive to resolve the problem that the chemical adhesive causes harms to health of workers, and improve the yield rate of the shoe component.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic view of the shoe component co-molded with the physically foamed midsole according to a first embodiment of the present invention;
FIG. 2 is a schematic view of the mesh layer of the shoe component co-molded with the physically foamed midsole according to the first embodiment of the present invention;
FIG. 3 is a sectional schematic view of the mesh layer of the shoe component co-molded with the physically foamed midsole according to the first embodiment of the present invention;
FIG. 4 is a partially enlarged view of a marked region A in FIG. 1;
FIG. 5 is a schematic view of the shoe component co-molded with the physically foamed midsole according to a second embodiment of the present invention;
FIG. 6 is a schematic view of the mesh layer of the shoe component co-molded with the physically foamed midsole according to the second embodiment of the present invention;
FIG. 7 is a partially enlarged view of a marked region B in FIG. 5;
FIG. 8 is a schematic view of an alternative configuration of the shoe component co-molded with the physically foamed midsole according to the second embodiment of the present invention;
FIG. 9 is a schematic view of the shoe component co-molded with the physically foamed midsole according to a third embodiment of the present invention;
FIG. 10 is a partially enlarged view of a marked region C in FIG. 9;
FIG. 11 is a flowchart of the method of manufacturing the shoe component co-molded with the physically foamed midsole according to an embodiment of the present invention;
FIG. 12 is a schematic view of the method of manufacturing the shoe component co-molded with the physically foamed midsole according to the embodiment of the present invention, showing that the composite outsole and the woven shoe upper are placed into the foaming mold and the foaming space is formed; and
FIG. 13 is a schematic view of the method of manufacturing the shoe component co-molded with the physically foamed midsole according to the embodiment of the present invention, showing that the physically foamed midsole is molded between the composite outsole and the woven shoe upper.

### DETAILED DESCRIPTION OF THE INVENTION

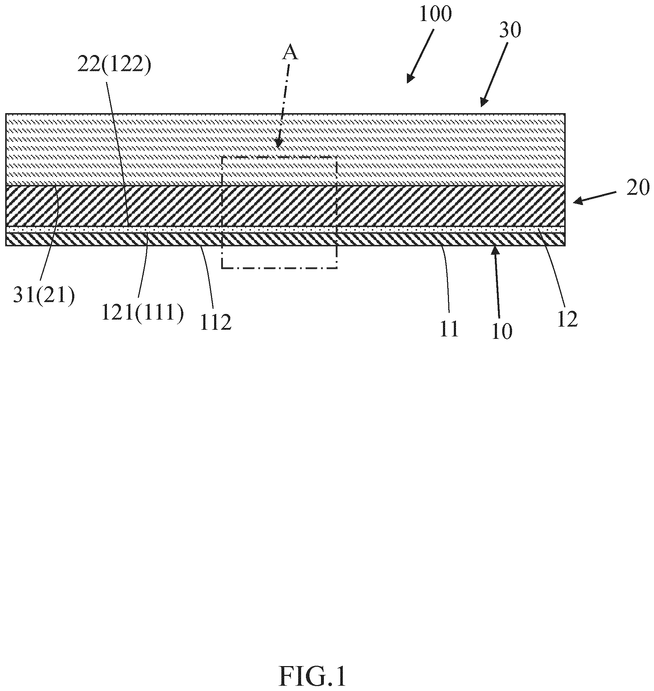

A shoe component 100 co-molded with a physically foamed midsole according to a first embodiment of the present invention is illustrated in FIG. 1 to FIG. 3 and is a shoe product as an example for illustration. The shoe component 100 co-molded with the physically foamed midsole includes a composite outsole 10, a physically foamed midsole 20, and a woven shoe upper 30.

The composite outsole 10 includes a base layer 11 and a mesh layer 12 co-molded with the base layer 11. The base layer 11 has a first top surface 111 and a first bottom surface 112. The first top surface 111 and the first bottom surface 112 face opposite directions. The first bottom surface 112 are adapted to contact a ground. In the current embodiment, the base layer 11 could be a first thermoplastic material; the first thermoplastic material could be selected from the group consisting of thermoplastic polyurethane (TPU), polyamide, polyester, ionomer, and a combination thereof. In another embodiment, the base layer 11 could be a thermosetting material; the thermosetting material could be selected from the group consisting of thermosetting polyurethane, rubber, and a combination thereof. The base layer 11 could be a foamed body or a non-foamed body, i.e., the first thermoplastic material or the thermosetting material could be a foaming material and be foamed through a mold to obtain the foamed body of the base layer 11; alternatively, the first thermoplastic material or the thermosetting material could be a non-foamed material and be injected into a mold for solidifying to form the non-foamed body of the base layer 11.

The mesh layer 12 has a first surface 121 and a second surface 122 that face opposite directions. The first surface 121 has a first surface structure 123. The second surface 122 has a second surface structure 124. The first surface structure 123 is different from the second surface structure 124. The first surface structure 123 is selected from the group consisting of a plurality of high-density pores, a plurality of loops, a thermoplastic film, and a combination thereof. The second surface structure 124 is selected from the group consisting of a plurality of low-density pores, a plurality of loops, and a combination thereof. In an embodiment, the first surface structure 123 is the thermoplastic film and the second surface structure 124 is the plurality of low-density pores. In another embodiment, the first surface structure 123 is the plurality of high-density pores and the second surface structure 124 is the plurality of loops. In still another embodiment, the first surface structure 123 is the plurality of loops and the second surface structure 124 is the plurality of low-density pores. In still another embodiment, the first surface structure 123 is the thermoplastic film and the second surface structure 124 is the plurality of loops. In still another embodiment, the first surface structure 123 is the plurality of high-density pores and the second surface structure 124 is the plurality of low-density pores. The mesh layer 12 could be a second thermoplastic material. The second thermoplastic material is selected from the group consisting of polyester, thermoplastic polyurethane (TPU), and a combination thereof.

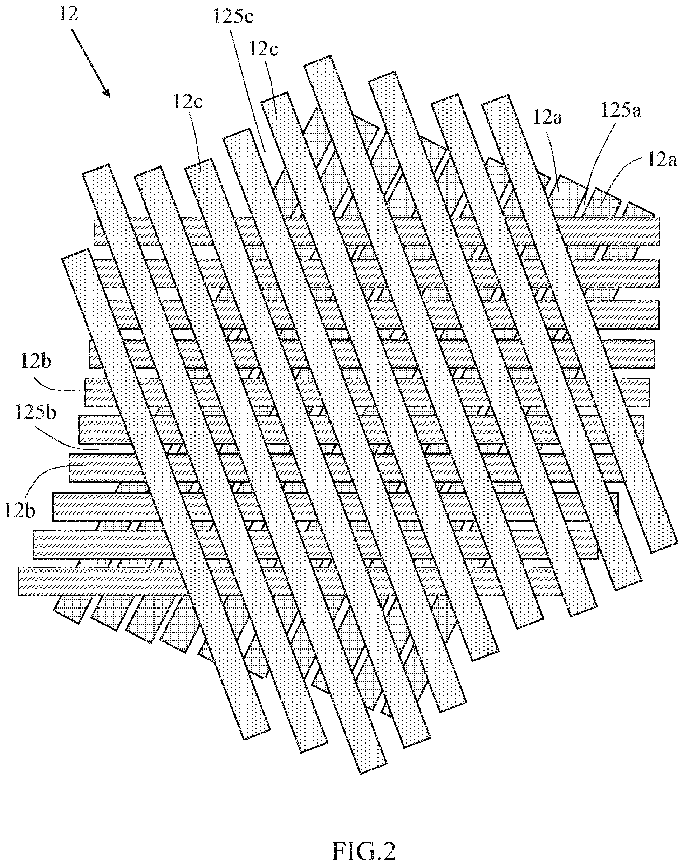

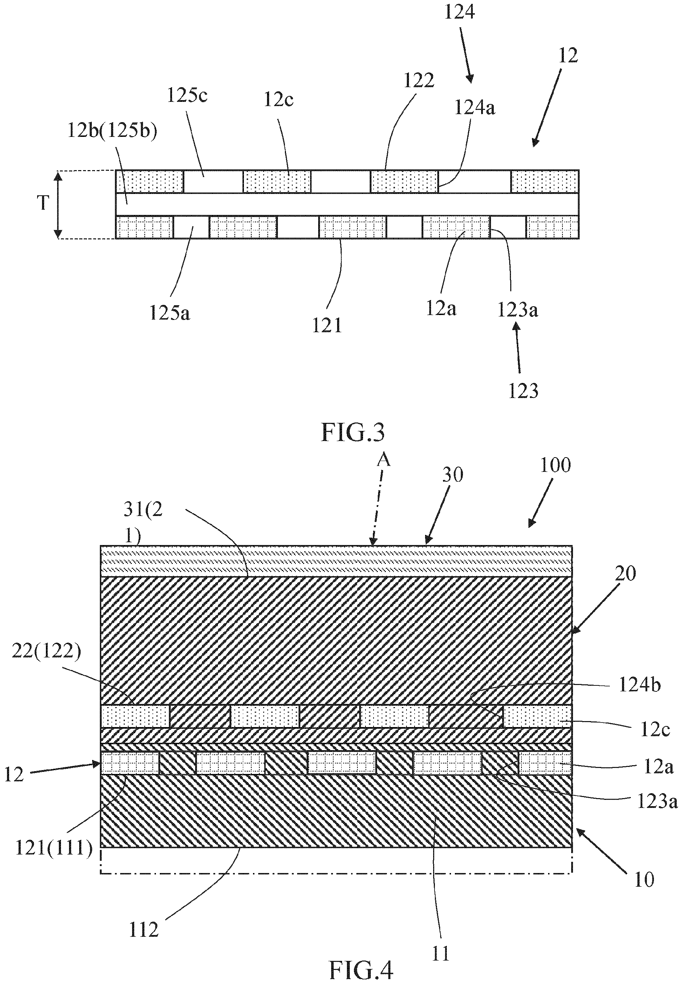

The mesh layer 12 has a thickness T. The thickness T ranges from 1 mm to 3 mm. If the thickness T of the mesh layer 12 is less than 1 mm, an anchor effect between the base layer 11 and the mesh layer 12 or an anchor effect between the physically foamed midsole 20 and the mesh layer 12 will be insufficient, thereby causing poor bonding effect. If the thickness T of the mesh layer 12 is greater than 3 mm, a weight of the mesh layer 12 is correspondingly increased and excessive materials of the base layer 11 or excessive materials of the physically foamed midsole 20 will enter the mesh layer 12, thereby increasing an overall weight of the shoe component 100. In the first embodiment, the mesh layer 12 is formed by 3D printing, such as FDM (fused deposition modeling), but it is not limited to FDM technology only. Referring to FIG. 2 and FIG. 3, the mesh layer 12 at least includes a plurality of first threads 12a, a plurality of second threads 12b, and a plurality of third threads 12c. The first threads 12a, the second threads 12b, and the third threads 12c are each formed by 3D printing. The first threads 12a and the second threads 12b are bonded through heating and melting. The third threads 12c and the second threads 12b are bonded through heating and melting. The first threads 12a are laid flat on a side of the second threads 12b. The third threads 12c are laid flat on another side of the second threads 12b. The first surface 121 formed on the first threads 12a is opposite to the second threads 12b. The second surface 122 formed on the third threads 12c is opposite to the second threads 12b. In the first embodiment, the first surface structure 123 of the first surface 121 is a plurality of high-density pores 123a; the second surface structure 124 of the second surface 122 is a plurality of low-density pores 124a; the high-density pores 123a communicate with the low-density pores 124a. In the present invention, the high-density pores 123a of the first surface 121 are defined as 70 or more pores per square centimeter; the low-density pores 124a of the second surface 122 are defined as 60 or less pores per square centimeter. A pore density refers to a number of pores within a unit area. When the pore density increases, more pores are distributed in the same area, and hence the size of each of the pores are correspondingly decreased. On contrast, when the pore density decreases, the size of each of the pores within the same area is correspondingly increased. It is shown that the size of each of the high-density pores 123a is less than the size of each of the low-density pores 124a.

More specifically, the first threads 12a, the second threads 12b, and the third threads 12c are each laid flat and are arranged by intervals. The first threads 12a have a plurality of first gaps 125a, wherein each of the first gaps 125a is located between two adjacent first threads 12a. The second threads 12b have a plurality of second gaps 125b, wherein each of the second gaps 125b is located between two adjacent second threads 12b. The third thread 12c have a plurality of third gaps 125c, wherein each of the third gaps 125c is located between two adjacent third threads 12c. When the first threads 12a are bonded with the second threads 12b, the first threads 12a and the second thread 12b are alternately arranged, and the high-density pores 123a on the first surface 121 are formed by the first gaps 125a alternately communicating with the second gaps 125b. When the third threads 12c are bonded with the second threads 12b, the third threads 12c and the second thread 12b are alternately arranged, and the low-density pores 124a on the second surface 122 are formed by the third gaps 125c alternately communicating with the second gaps 125b. In the first embodiment, when the first threads 12a and the third threads 12c are respectively bonded with the second threads 12b, an arrangement direction of the first threads 12a is different from an arrangement direction of the third threads 12c. Referring to FIG. 2 and FIG. 3, for example, the second threads 12b are arranged in a horizontal manner, and the first threads 12a and the third threads 12c are arranged in an oblique relative to the second thread 12b, wherein an oblique direction of the first threads 12a is opposite to an oblique direction of the third threads 12c, so that the high-density pores 123 a of the first surface 121 alternately communicate with the low-density pores 124a of the second surface 122.

Moreover, referring to FIG. 1 and FIG. 4, the first surface 121 of the mesh layer 12 is correspondingly engaged with the first top surface 111 of the base layer 11, and the first top surface 111 of the base layer 11 and the first surface structure 123 of the first surface 121 of the mesh layer 12 are engaged with and attached to each other.

The physically foamed midsole 20 is engaged with the composite outsole 10. The physically foamed midsole 20 has a second top surface 21 and a second bottom surface 22 that face opposite directions. Referring to FIG. 4, the second bottom surface 22 of the physically foamed midsole 20 is correspondingly engaged with the second surface 122 of the mesh layer 12. A part of the second bottom surface 22 of the physically foamed midsole 20 enters the second surface structure 124 of the second surface 122 of the mesh layer 12 to generate a fitting effect, so that the physically foamed midsole 20 and the mesh layer 12 generate an anchor effect to be attached to each other. In the current embodiment, both the mesh layer 12 and the physically foamed midsole 20 are made of thermoplastic material, wherein a material of the physically foamed midsole 20 could be the first thermoplastic material. In a non-limiting embodiment, the mesh layer 12 and the physically foamed midsole 20 could be made of the same thermoplastic material. For example, the mesh layer 12 and the physically foamed midsole 20 could be both made of thermoplastic polyurethane (TPU) or polyester.

When the physically foamed midsole 20 and the base layer 11 are correspondingly engaged with the mesh layer 12, the second bottom surface 22 of the physically foamed midsole 20 easily fits into the low-density pores 124a of the second surface 122 of the mesh layer 12 to generate a fitting effect, so that the anchor effect is generated between the physically foamed midsole 20 and the mesh layer 12. In contrast, the effect that the first top surface 111 of the base layer 11 fits into the high-density pores 123a of the first surface 121 of the mesh layer 12 is relatively limited, i.e., the size of the high-density pores 123a restricts a volume of the base layer 11 fitting into the mesh layer 12, so that a capacity of the mesh layer 12 that is not fitted in by the base layer 11 is reserved and correspondingly a volume of the physically foamed midsole 20 fitting into the mesh layer 12 is relatively increased, thereby enhancing an engagement between the physically foamed midsole 20 and the mesh layer 12.

The composition and the physical properties of the physically foamed midsole 20 are described below. The physically foamed midsole 20 includes a thermoplastic material and a foaming aid, wherein a weight of the thermoplastic material of the physically foamed midsole 20 ranges from 90 wt% to 99 wt% of a weight of the physically foamed midsole 20. The thermoplastic material of the physically foamed midsole 20 is the first thermoplastic material and is selected from the group consisting of thermoplastic polyurethane (TPU), polyamide, polyester, ionomer, and a combination thereof. A weight of the foaming aid ranges from 1 wt% to 10 wt% of the weight of the physically foamed midsole 20. The foaming aid is selected from the group consisting of mineral fiber, calcium carbonate, silica, talcum powder, sodium bicarbonate, and a combination thereof. The physically foamed midsole 20 has a weight density from 0.1 g/cm³ to 0.3 g/cm³. A plurality of bubbles is distributed in the physically foamed midsole 20 (not shown), wherein a diameter of each bubble ranges from 0.1 µm to 100 µm. In this way, the physically foamed midsole 20 has evenly distributed small bubbles and low weight density, so that the physically foamed midsole 20 has a high elasticity and a low tendency to permanently deform due to compression.

The woven shoe upper 30 is engaged with the second top surface 21 of the physically foamed midsole 20. The whole woven shoe upper 30 is a woven body. The woven shoe upper 30 includes a third thermoplastic material. The third thermoplastic material is selected from the group consisting of polyester, thermoplastic polyurethane (TPU), polyamide, polyethylene terephthalate (PET), and a combination thereof. The second thermoplastic material of the mesh layer 12, the first thermoplastic material of the physically foamed midsole 20, and the third thermoplastic material of the woven shoe upper 30 could be the same material upon requirements. For example, the mesh layer 12, the physically foamed midsole 20, and the woven shoe upper 30 could be polyester or thermoplastic polyurethane (TPU). The woven shoe upper 30 has a third bottom surface 31. A plurality of fiber pores is distributed on the third bottom surface 31 (not shown). The third bottom surface 31 of the woven shoe upper 30 is correspondingly engaged with the second top surface 21 of the physically foamed midsole 20, wherein a part of the second top surface 21 of the physically foamed midsole 20 enters the fiber pores of the third bottom surface 31 to generate a fitting effect. No adhesive layer is provided between the mesh layer 12 and the physically foamed midsole 20 and between the physically foamed midsole 20 and the woven shoe upper 30.

In this way, in the shoe component 100 co-molded with the physically foamed midsole, no adhesive layer is provided between the second bottom surface 22 of the physically foamed midsole 20 and the second surface 122 of the mesh layer 12 and between the second top surface 21 of the physically foamed midsole 20 and the third bottom surface 31 of the woven shoe upper 30. The high-density pores 123a of the first surface structure 123 and the low-density pores 124a of the second surface structure 124 of the mesh layer 12 of the composite outsole 10 work with the fiber pores of the woven shoe upper 30, so that two opposite surfaces of the physically foamed midsole 20 partially fit into the low-density pores 124a of the mesh layer 12 and the fiber pores of the woven shoe upper 30 to be engaged in an anchor manner, so that engaging strengths between the physically foamed midsole 20 and the composite outsole 10 and between the physically foamed midsole 20 and the woven shoe upper 30 are improved, thereby achieving stable attachments.

In other embodiments, the shoe component 100 co-molded with the physically foamed midsole could be changed to a sole upon requirements, i.e., the woven shoe upper 30 could be omitted, and the shoe component 100 co-molded with the physically foamed midsole is composed of the composite outsole 10 and the physically foamed midsole 20.

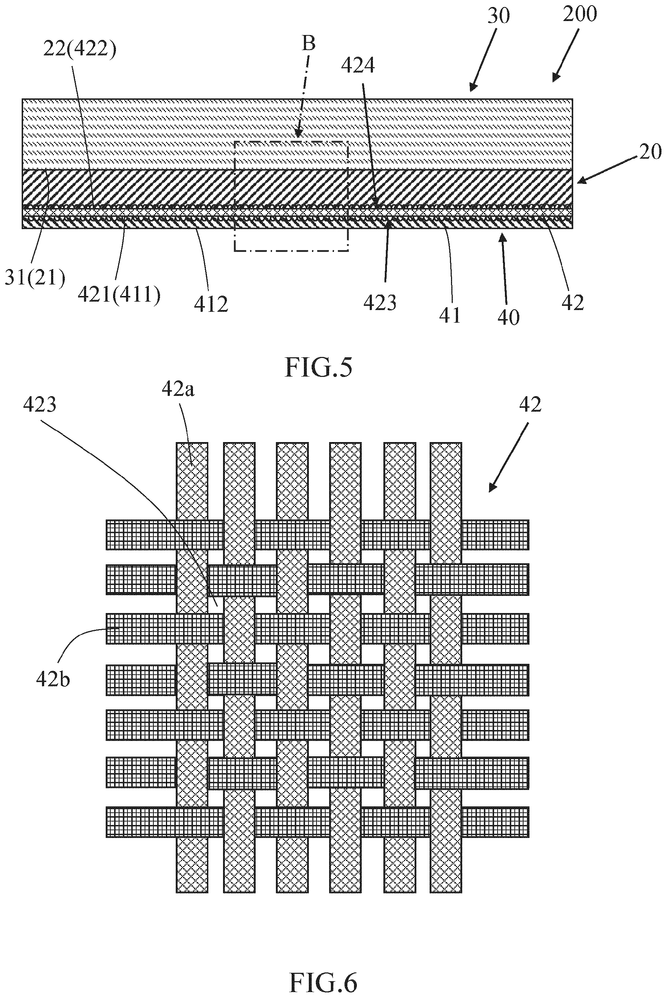

A shoe component 200 co-molded with a physically foamed midsole according to a second embodiment of the present invention is illustrated in FIG. 5 to FIG. 7 and includes a composite outsole 40, the aforementioned physically foamed midsole 20, and the aforementioned woven shoe upper 30, wherein the physically foamed midsole 20 and the woven shoe upper 30 of the second embodiment have the same structure, the same composition, and the same physical properties as that of the first embodiment.

The composite outsole 40 includes a base layer 41 and a mesh layer 42. The base layer 41 has a first top surface 411 and a first bottom surface 412. The base layer 41 of the second embodiment has a material and a configuration substantially the same as the base layer 11 of the first embodiment. The mesh layer 42 has a first surface 421 and a second surface 422 that face opposite directions. Referring to FIG. 6, in the second embodiment, the mesh layer 42 is a yarn fabric formed by alternately weaving warps 42a and wefts 42b. The yarn fabric of the mesh layer 42 of the second embodiment is a woven fabric formed by alternately weaving the warps 42a and the wefts 42b. The first surface 421 of the mesh layer 42 has a first surface structure 423. The second surface 422 of the mesh layer 42 has a second surface structure 424. The first surface structure 423 is different from the second surface structure 424. The first surface structure 423 is selected from the group consisting of a plurality of high-density pores, a plurality of loops, a thermoplastic film, and a combination thereof. The second surface structure 424 is selected from the group consisting of a plurality of low-density pores, a plurality of loops, and a combination thereof. In the second embodiment, the first surface structure 423 of the first surface 421 includes a plurality of high-density pores 423a and a plurality of loops 423b; the second surface structure 424 of the second surface 422 includes a plurality of low-density pores 424a and a plurality of loops 424b. In this way, the mesh layer 42 could be formed by stacking at least two woven fabrics, so that the first surface 421 has the high-density pores 423a, and the second surface 122 has the low-density pores 424a, wherein the high-density pores 423a and the low-density pores 424a are gaps formed by an alternate arrangement of the warps 42a and wefts 42b in the yarn fabric; the loops 423b of the first surface structure 423 and the loops 424b of the second surface structure 424 are yarn fibers (loop structures) respectively protruding from the first surface 421 and the second surface 422 and protrude relative to surfaces of the mesh layer 42.

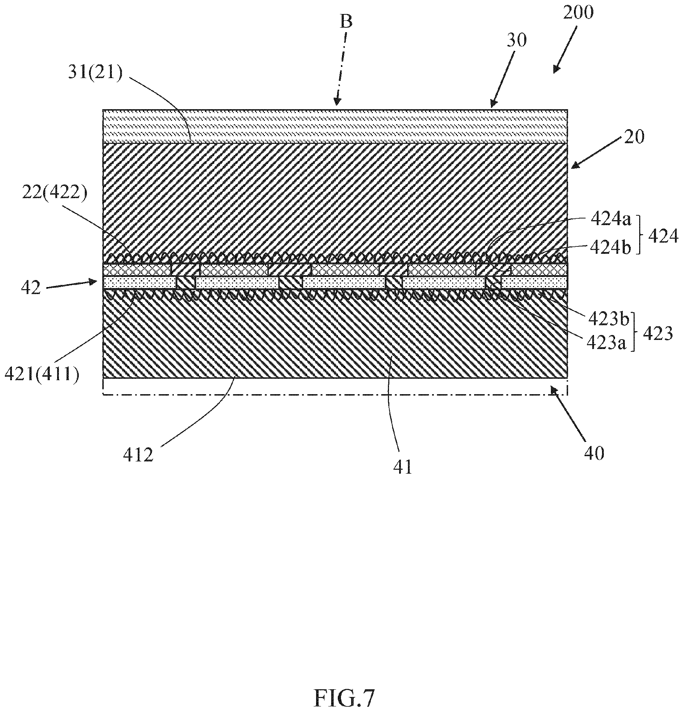

Referring to FIG. 7, the first top surface 411 of the base layer 41 is correspondingly engaged with the first surface structure 423 of the first surface 421 of the mesh layer 42, wherein a part of the first top surface 411 of the base layer 41 enters the loops 423b of the first surface structure 423 of the first surface 421 and fits into the high-density pores 423a, and the first top surface 411 of the base layer 41 covers the loops 423b of the first surface structure 423, so that the base layer 41 and the mesh layer 42 generate an anchor effect to be attached to each other. Moreover, the physically foamed midsole 20 is correspondingly engaged with the second surface 422 of the mesh layer 42 of the composite outsole 40, wherein a part of the second bottom surface 22 of the physically foamed midsole 20 enters the loops 424b of the second surface structure 424 of the second surface 422 and fits into the low-density pores 424a, and the second bottom surface 22 of the physically foamed midsole 20 covers the loops 424b of the second surface structure 424, so that the physically foamed midsole 20 and the mesh layer 42 generate an anchor effect to be attached to each other. Similarly, no adhesive layer is provided between the second bottom surface 22 of the physically foamed midsole 20 and the second surface 422 of the mesh layer 42.

The yarn fabric of the mesh layer 42 in the second embodiment is not limited to the woven fabric. For example, the mesh layer 42 could be a knit fabric or a sandwich mesh. The knit fabric includes single knit fabric or double knit fabric, but not limited thereto. The sandwich mesh is a three-layer knit fabric composed of a top knit fabric, a middle mono yarn, and a bottom knit fabric, wherein the middle mono yarn separates the top knit fabric and the bottom knit fabric, so that a thickness of the mesh layer 42 with the three-layer knit fabric structure could range from 1 mm to 3 mm. The second surface 422 of the top knit fabric of the mesh layer 42 with the three-layer knit fabric could have the second surface structure 424, and the first surface 421 of the bottom knit fabric of the mesh layer 42 could have the first surface structure 423, so that the first surface 421 has the high-density pores 423a and the second surface 422 has the low-density pores 424a. When the physically foamed midsole 20 and the base layer 41 are respectively and correspondingly engaged with the mesh layer 42 with the three-layer knit fabric structure, the top knit fabric, the middle mono yarn, and the bottom knit fabric of the mesh layer 42 could correspondingly increase the thickness and a capacity of the mesh layer 42, so that the base layer 41 and the physically foamed midsole 20 partially fit into the first surface structure 423 and the second surface structure 424 of the mesh layer 42 respectively to generate the anchor effects for attachment. As the first surface 421 has the high-density pores 423a to appropriately restrict a volume of the base layer 41 fitting into the mesh layer 12, a capacity of the mesh layer 12 that is not fitted in by the base layer 41 is reserved for engaging with the physically foamed midsole 20. It is worth mentioning that in the second embodiment, the yarn fabric of the mesh layer 42 excludes non-woven fabric, because fibers of the non-woven fabric are not alternately woven or heated and melted, so that the structure of the mesh layer 42 might be easily loosened, which could not enhance the engaging strength between the physically foamed midsole 20 and the composite outsole 40.

In this way, the mesh layer 42 of the composite outsole 40 of the shoe component 200 co-molded with the physically foamed midsole makes use of the yarn fabric, so that the attachment between the physically foamed midsole 20 and the composite outsole 40 could be further enhanced, thereby improving a peel strength between the physically foamed midsole 20 and the composite outsole 40. An adhesive force between the composite outsole 40 and the physically foamed midsole 20 is at least 2.5 kg/cm², so that a good attachment between the physically foamed midsole 20 and the composite outsole 40 could be achieved without providing an adhesive layer between the composite outsole 40 and the physically foamed midsole 20.

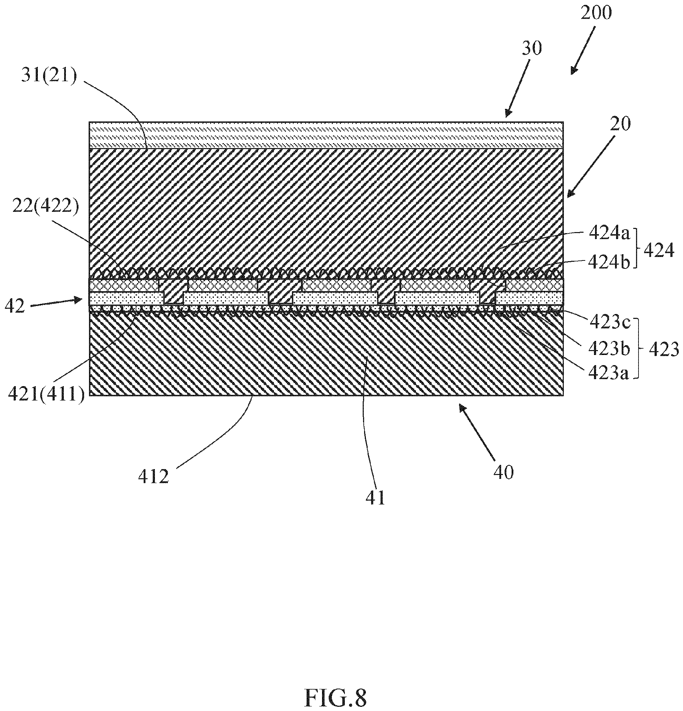

Referring to FIG. 8, in an alternative configuration of the second embodiment, the first surface structure 423 of the mesh layer 42 further includes a thermoplastic film 423c. The thermoplastic film 423c is laid on and bonded with the first surface 421 of the mesh layer 42. The thermoplastic film 423c fits into the high-density pores 423a and covers the loops 423b of the first surface structure 423. The thermoplastic film 423c is bonded between the mesh layer 42 and the base layer 41. A thickness of the thermoplastic film 423c ranges from 0.05 mm to 1 mm. When the thickness of the thermoplastic film 423c is less than 0.05 mm, a heating and melting effect between the thermoplastic film 423c and the base layer 41 is limited. When the thickness of the thermoplastic film 423c is greater than 1 mm, a weight of the composite outsole 40 is greatly increased. Therefore, the thickness of the thermoplastic film 423c in the present invention ranges from 0.05 mm to 1 mm, so that the heating and melting effect between the thermoplastic film 423c and the base layer 41 and the weight of the composite outsole 40 could be balanced. In the second embodiment, a polarity of a material of the thermoplastic film 423c is similar to or identical to a polarity of the base layer 41, thereby being conducive to engaging the thermoplastic film 423c with the first top surface 411 of the base layer 41 through heating and melting. In the second embodiment, the thermoplastic film 423c is made of a thermoplastic film material and is bonded with the mesh layer 42 through heating and softening, wherein the thermoplastic film material could be the same as the first thermoplastic material of the first embodiment, i.e., the thermoplastic film material is selected from the group consisting of thermoplastic polyurethane (TPU), polyamide, polyester, ionomer, and a combination thereof. The thermoplastic film 423c does not affect the attachment between the mesh layer 42 and the base layer 41 and could restrict a volume of the base layer 41 fitting into the mesh layer 42, so that the base layer 41 could be prevented from passing through the high-density pores 423a of the first surface 421 to excessively enter the low-density pores 424a of the second surface 422, thereby relieving the problem that the second surface 422 of the mesh layer 42 is fully filled with the part of the base layer 41 to weaken the attachment between the second surface structure 424 of the mesh layer 42 and the physically foamed midsole 20.

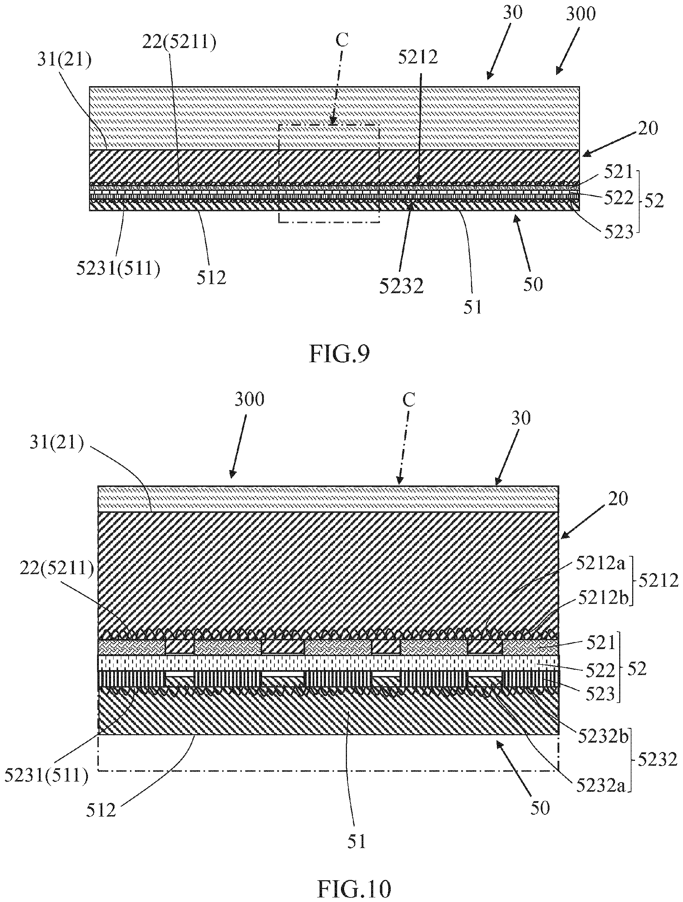

A shoe component 300 co-molded with a physically foamed midsole according to a third embodiment of the present invention, is illustrated in FIG. 9 and FIG. 10 and includes a composite outsole 50, the physically foamed midsole 20, and the woven shoe upper 30, wherein the physically foamed midsole 20 and the woven shoe upper 30 of the third embodiment have the same structure, the same composition, and the same physical properties as that of the first embodiment.

The composite outsole 50 includes a base layer 51 and a mesh layer 52. The base layer 51 has a first top surface 511 and a first bottom surface 512. The base layer 51 of the third embodiment has a material and a configuration substantially the same as the base layer 11 of the first embodiment. The mesh layer 52 is a yarn fabric including a first woven layer 521, an attachment layer 522, and a second woven layer 523. The first woven layer 521 and the second woven layer 523 are respectively bonded with the attachment layer 522 and are respectively located on opposite sides of the attachment layer 522. The first woven layer 521 and the second woven layer 523 could be bonded with the attachment layer 522 through weaving, adhering, or heating and melting. An outer side of the first woven layer 521 has a second surface 5211. An outer side of the second woven layer 523 has a first surface 5231. A fiber material of the first woven layer 521 and a fiber material of the second woven layer 523 could be identical or different upon requirements. The fiber material of the second woven layer 523 has a polarity identical to or similar to a polarity of a material of the base layer 51. The first surface 5231 of the mesh layer 52 has a first surface structure 5232. The second surface 5211 has a second surface structure 5212. The first surface structure 5232 is selected from the group consisting of a plurality of high-density pores, a plurality of loops, a thermoplastic film, and a combination thereof. The second surface structure 5212 is selected from the group consisting of a plurality of low-density pores, a plurality of loops, and a combination thereof. The first surface structure 5232 is different from the second surface structure 5212. In the third embodiment, the first surface structure 5232 includes a plurality of high-density pores 5232a and a plurality of loops 5232b; the second surface structure 5212 includes a plurality of low-density pores 5212a and a plurality of loops 5212b. The high-density pores 5232a and the loops 5232b of the first surface structure 5232 of the third embodiment are the same as the first surface structure 423 of the second embodiment with respect to structure and function. The low-density pores 5212a and the loops 5212b of the second surface structure 5212 of the third embodiment are the same as the second surface structure 424 of the second embodiment with respect to structure and function.

Referring to FIG. 10, the first top surface 511 of the base layer 51 is correspondingly engaged with the first surface 5231 of the second woven layer 523 of the mesh layer 52, and a part of the first top surface 511 of the base layer 51 fits into the high-density pores 5232a and the loops 5232b of the first surface structure 5232, so that the base layer 51 and the second woven layer 523 of the mesh layer 52 generate an anchor effect to be bonded to each other.

The physically foamed midsole 20 is correspondingly engaged with the second woven layer 523 of the mesh layer 52 of the composite outsole 50. A part of the second bottom surface 22 of the physically foamed midsole 20 enters the loops 5212b of the second surface 5211 of the first woven layer 521, and the part of the second bottom surface 22 of the physically foamed midsole 20 fits into the low-density pores 5212a of the second surface 5211 and covers the loops 5212b of the second surface 5211, so that the physically foamed midsole 20 and the first woven layer 521 of the mesh layer 52 generate an anchor effect to be attached to each other, and no adhesive layer is provided between the second top surface 21 of the physically foamed midsole 20 and the first woven layer 521 of the mesh layer 52. In this way, the design of the mesh layer 52 of the shoe component 300 could be changed based on a material of the physically foamed midsole 20 and a material of the base layer 51 to have the first woven layer 521 and the second woven layer 523 that are made of different fiber materials, so that the physically foamed midsole 20 and the base layer 51 could be effectively engaged with the mesh layer 52, thereby improving engaging stabilities between the physically foamed midsole 20 and the mesh layer 52 and between the base layer 51 and the mesh layer 52 and enhancing a peel strength between the physically foamed midsole 20 and the mesh layer 52.

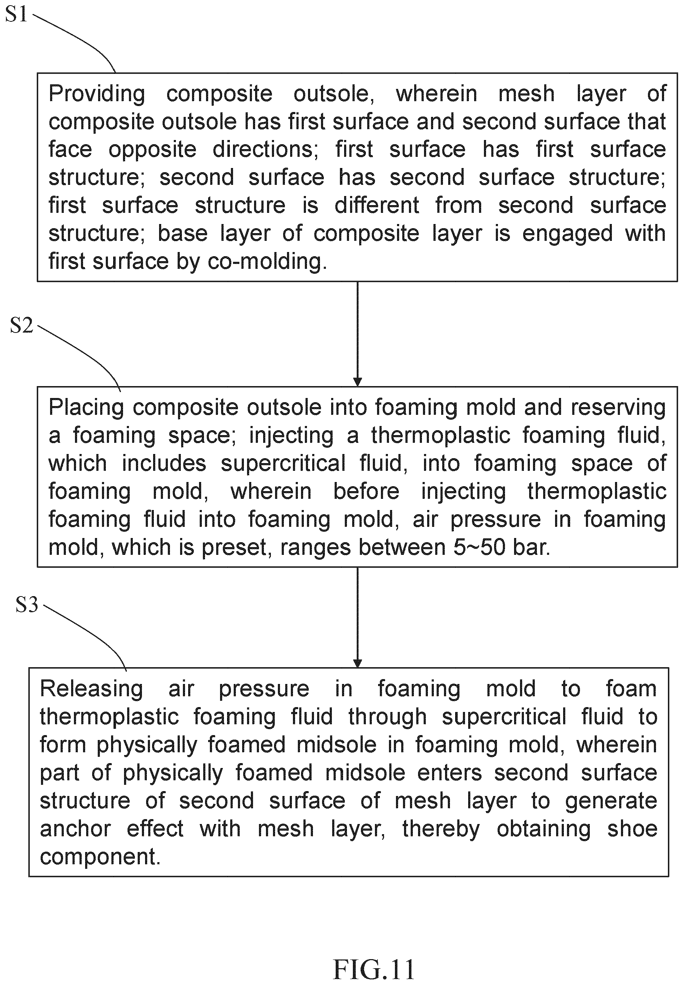

FIG. 11 is a flowchart of a method of manufacturing a shoe component co-molded with a physically foamed midsole according to an embodiment of the present invention. The method of manufacturing the shoe component co-molded with the physically foamed midsole includes using the woven shoe upper 30 of the second embodiment and the mesh layer 42 of the second embodiment to manufacture the composite outsole 40 and the physically foamed midsole 20. In other embodiments, the method of manufacturing the shoe component co-molded with the physically foamed midsole could include using the mesh layer 12 of the first embodiment or the mesh layer 52 of the third embodiment to manufacture the composite outsole 10 or the composite outsole 50. The method of manufacturing the shoe component co-molded with the physically foamed midsole includes steps of:

Step S1: the composite outsole 40 is provided, wherein the first surface 421 of the mesh layer 42 of the composite outsole 40 has a first surface structure 423; the second surface 422 has a second surface structure 424; the first surface structure 423 is different from the second surface structure 424; the base layer 41 of the composite outsole 40 is engaged with the first surface 421; the composite outsole 40 could be manufactured by different ways; alternatively, the composite outsole 40 could be directly provided; in the current embodiment, the way to provide the composite outsole 40 is to firstly place the mesh layer 42 into an injection mold and to reserve a molding space in the injection mold; then, an outsole material is injected into the molding space of the injection mold, so that the outsole material and the first surface structure 423 of the first surface 421 of the mesh layer 42 are engaged with each other through co-molding; when the outsole material is solidified to form the base layer 41, the first top surface 411 of the base layer 41 is engaged with the first surface 421; the way that the first top surface 411 of the base layer 41 and the first surface 421 of the mesh layer 42 are engaged depends on the first surface structure 423 of the first surface 421; when the first surface structure 423 includes a plurality of high-density pores 423a and a plurality of loops 423b (referring to FIG. 7), a part of the first top surface 411 of the base layer 41 fits into the high-density pores 423a of the first surface 421 and covers the loops 423b of the first surface 421 for engagement.

In another embodiment, the way to provide the composite outsole 40 is to form a thermoplastic film 423c on the first surface structure 423 of the first surface 421 of the mesh layer 42 in advance, i.e., firstly, the thermoplastic film 423c is engaged with the first surface 421 of the mesh layer 42, so that the first surface structure 423 of the first surface 421 includes the thermoplastic film 423c; then, the mesh layer 42 and the base layer 41 are engaged through co-molding. The thickness and the material of the thermoplastic film 423c are the same as aforementioned. During the injection of the outsole material, the thermoplastic film 423c could prevent the outsole material from excessively entering the first surface 421 of the mesh layer 42. The outsole material is in contact with the thermoplastic film 423c of the mesh layer 42 in the injection mold to be solidified into the base layer 41. The first top surface 411 of the base layer 41 is engaged with the thermoplastic film 423c of the mesh layer 42 through heating and melting, thereby obtaining the composite outsole 40:

In still another embodiment, the way to provide the composite outsole 40 is to directly print the outsole material on the first surface 421 of the mesh layer 42 by using a 3D printing apparatus, so that a part of the outsole material infiltrates into fibers of the first surface 421 of the mesh layer 42; the outsole material is solidified to form the base layer 41, and a part of the first top surface 411 of the base layer 41 fits into the first surface 421, and a part of the fibers of the first surface 421 enters the base layer 41, thereby obtaining the composite outsole 40.

In still another embodiment, the way to provide the composite outsole 40 is to place the mesh layer 42 into a molding tool; then the outsole material is injected by an injection apparatus into the molding tool to correspond to the first surface structure 423 of the first surface 421 of the mesh layer 42, so that the outsole material and the first surface 421 are engaged through co-molding; the outsole material is solidified to form the base layer 41, thereby obtaining the composite outsole 40.

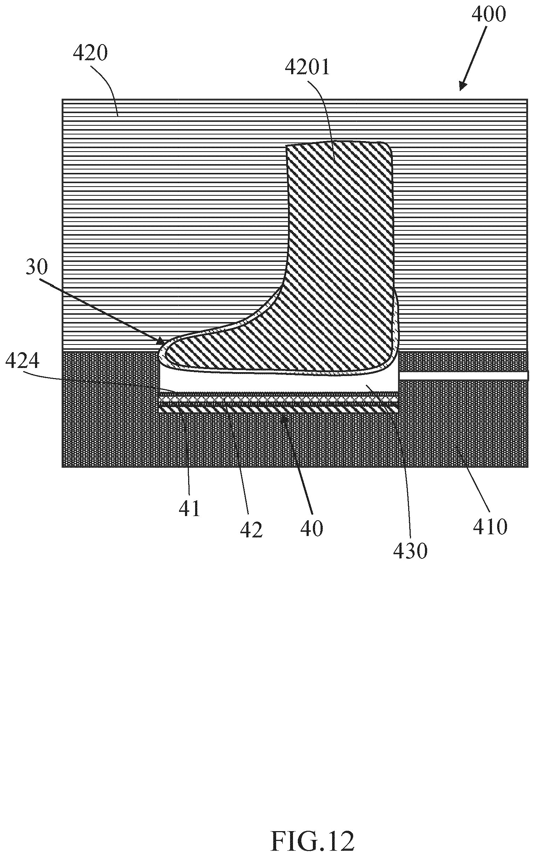

Step S2: the composite outsole 40 is placed into a bottom cavity of a bottom mold 410 of a foaming mold 400; the woven shoe upper 30 is lasted around a last 4201 and then the lasted woven shoe upper 30 is placed into a top mold 420 of the foaming mold 400; referring to FIG. 12, when the foaming mold 400 is activated to close the bottom mold 410 and the top mold 420, the lasted woven shoe upper 30 is fixed in the top mold 420 of the foaming mold 400; the third bottom surface 31 of the woven shoe upper 30 faces the second surface 422 of the composite outsole 40, so that the woven shoe upper 30 and the composite outsole 40 are jointly placed in the foaming mold 400, and a foaming space 430 is reserved between the woven shoe upper 30 and the composite outsole 40; a thermoplastic foaming fluid, which includes a supercritical fluid, is injected into the foaming space 430 of the foaming mold 400; in the current embodiment, the supercritical fluid includes nitrogen or carbon dioxide; before the thermoplastic foaming fluid is injected into the foaming mold 400, an air pressure in the foaming mold 400, which is preset, ranges from 5 bar to 50 bar; in an embodiment, the air pressure that is preset ranges from 5 bar to 20 bar; when the thermoplastic foaming fluid is injected into the foaming mold 400, a content of the thermoplastic foaming fluid injected into the foaming mold 400 is from 10% to 50% of a volume of the foaming space 430; as the foaming mold 400 has the preset air pressure, the thermoplastic foaming fluid could remain an unfoamed state during entering the foaming mold 400.

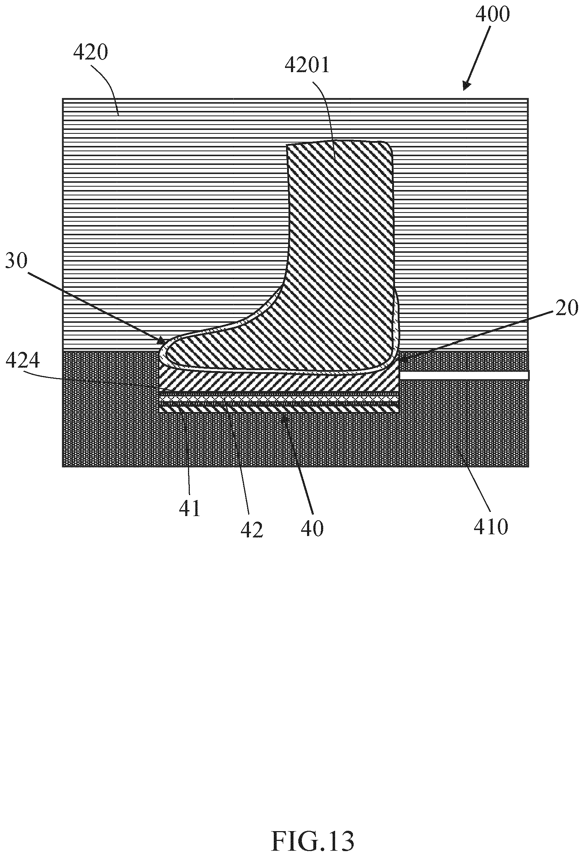

Step S3: the air pressure in the foaming mold 400 is released to foam the thermoplastic foaming fluid and to fully fill the foaming space 430 with the thermoplastic foaming fluid, thereby forming the physically foamed midsole 20; referring to FIG. 13, the physically foamed midsole 20 is located between the woven shoe upper 30 and the mesh layer 42 of the composite outsole 40; a ratio of a volume of the foaming space 430 of the foaming mold 400 to a volume of the physically foamed midsole 20 ranges from 1:0.98 to 1: 1.02; while the physically foamed midsole 20 is foamed, a part of the second bottom surface 22 of the physically foamed midsole 20 enters the second surface structure 424 of the second surface 422 of the mesh layer 42, and a part of the second top surface 21 of the physically foamed midsole 20 enters the third bottom surface 31 of the woven shoe upper 30, so that the physically foamed midsole 20 generate anchor effects with the mesh layer 42 and the woven shoe upper 30 at the same time, thereby obtaining the shoe component 200 co-molded with the physically foamed midsole.

In this way, the method of manufacturing the shoe component co-molded with the physically foamed midsole could omit processing procedures such as surface roughing, applying an adhesive, outsole-attaching, etc. Moreover, the physically foamed midsole 20 is formed by physically foaming the supercritical fluid, so that solidifying the physically foamed midsole 20 in an oven could be omitted. Therefore, the method of manufacturing the shoe component co-molded with the physically foamed midsole has a simpler process than a conventional method of manufacturing shoes, thereby enhancing the production efficiency, avoiding the procedure of applying the adhesive to resolve the problem that the chemical adhesive causes harms to health of workers, and improving the yield rate of the shoe component 200.

Additionally, a volume of the shoe component 200 obtained by the method of manufacturing the shoe component co-molded with the physically foamed midsole is substantially the same as a volume of a space in the foaming mold 400, wherein the space in the foaming mold 400 is a combination of a space of the bottom mold 410 and a space of the top mold 420. With the volume of the space in the foaming mold 400, the method of manufacturing the shoe component co-molded with the physically foamed midsole could correspondingly provide the shoe component 200 with a required volume and omit subsequent trimming procedures of the shoe component 200, so that the production cost and the pollution due to waste could be both reduced, thereby achieving the power-saving and environmentally friendly purpose.

In order to demonstrate the purpose, the features, and the effects of the present invention, a shoe component of an experimental group of the current embodiment and shoe components of control groups 1-3 are used to conduct the following physical property experiment of the peel strength, wherein the shoe component of the experiment group and the shoe components of the control groups 1-3 are soles for the physical property experiment.
1. Structures of the shoe component of the experiment group and the shoe components of the control groups:
   Experimental group: the shoe component of the experimental group is the shoe component 200 of the second embodiment and includes the composite outsole 40 and the physically foamed midsole 20; the engagement and the way to provide the composite outsole 40 and the physically foamed midsole 20 are the same as aforementioned; the mesh layer 42 is the sandwich mesh of the second embodiment that is composed of the top knit fabric, the middle mono yarn, and the bottom knit fabric; the first surface 421 of the mesh layer 42 has a first surface structure 423; the second surface 422 of the mesh layer 42 has a second surface structure 424; the first surface structure 423 has a plurality of high-density pores (100 pores per square centimeter of the first surface 421) and the second surface structure 424 has a plurality of low-density pores (50 pores per square centimeter of the second surface 422).
   Control group 1: the shoe component of the control group 1 includes an outsole and a physically foamed midsole; a method of manufacturing the shoe component of the control group 1 involves roughening the surface of the outsole, applying a surface treatment agent and a glue to the roughed surface sequentially; then the outsole is placed into the foaming mold and the thermoplastic foaming fluid is injected into the foaming mold for physical foaming, so that the physically foamed midsole is adhered to the roughed surface of the outsole, thereby forming the shoe component of the control group 1; the mesh layer of the current embodiment is not provided between the physically foamed midsole and the outsole of the control group 1.
   Control group 2: the shoe component of the control group 2 includes an outsole, a TPU film, and a physically foamed midsole; a method of manufacturing the shoe component of the control group 2 involves applying a surface treatment agent and a glue to a surface of the outsole sequentially and then attaching the TPU film to a glued surface of the outsole, wherein a surface of the TPU film is provided without pores; then, the outsole and the TPU film are jointly placed into the foaming mold and the thermoplastic foaming fluid is injected into the foaming mold for physical foaming, so that the physically foamed midsole is engaged with the TPU film, thereby forming the shoe component of the control group 2.
   Control group 3: a shoe component of the control group 3 includes a composite outsole and a physically foamed midsole; the composite outsole of the control group 3 is formed by co-molding a base layer with a mesh layer; a first surface of the mesh layer has a first surface structure; a second surface of the mesh layer has a second surface structure; the first surface structure and the second surface structure are the same low-density pores, i.e., 50 pores per square centimeter; then the composite outsole is placed into the foaming mold and the thermoplastic foaming fluid is injected into the foaming mold for physical foaming, so that the physically foamed midsole is engaged with the mesh layer, thereby forming the shoe component of the control group 3; it is worth mentioning that after the composite outsole of the control group 3 is formed, the second surface of the mesh layer, which is not in contact with the base layer, is almost fully filled by the base layer.
2. Experiment of determining the peel strength between the midsole and the outsole of the experimental group and the control groups 1-3

The shoe component 200 of the experimental group and the shoe components of the control groups 1-3 are used to conduct the experiment of determining the peel strength between the midsole and the outsole (ASTM-D903 Test Method). The peel strengths of the experimental group and the control groups 1-3 are listed in Table 1.

**Table 1: table showing the peel strengths of the experimental group and the control groups 1-3**

| Item | Experimental group | Control group 1 | Control group 2 | Control group 3 |
|---|---|---|---|---|
| Peel strength (kg/cm) | > 2.5 | < 1.5 | < 1.5 | < 2.0 |

Based on the results of the experiment, the peel strength of the experimental group is greater than 2.5 kg/cm; the peel strength of the control group 3 is less than 2.0 kg/cm; both the peel strength of the control group 1 and the peel strength of the control group 2 are less than 1.5 kg/cm. Therefore, the peel strength of the experimental group is greater than the peel strength of the control group 1-3, showing that the mesh layer 42 of the composite outsole 40 of the shoe component 200 co-molded with the physically foamed midsole of the experimental group could enhance the attachment between the physically foamed midsole 20 and the composite outsole 40 and avoid the use of any adhesive, thereby strengthening the attachment between the physically foamed midsole 20 and the composite outsole 40.

## Claims

1. A shoe component (100, 200, 300) co-molded with a physically foamed midsole, comprising:
a composite outsole (10, 40, 50) comprising a base layer (11, 41, 51) and a mesh layer (12, 42, 52) co-molded with the base layer (11, 41, 51), wherein the base layer (11, 41, 51) has a first top surface (111, 411, 511) and a first bottom surface (112, 412, 512); the first bottom surface (112, 412, 512) is adapted to contact a ground; the mesh layer (12, 42, 52) has a first surface (121, 421, 5231) and a second surface (122, 422, 5211) that face opposite directions; the first surface (121, 421, 5231) has a first surface structure (123, 423, 5232); the second surface (122, 422, 5211) has a second surface structure (124, 424, 5212); the first surface structure (123, 423, 5232) is different from the second surface structure (124, 424, 5212); the first surface (121, 421, 5231) is engaged with the first top surface (111, 411, 511) of the base layer (11, 41, 51); and
a physically foamed midsole (20) formed from a supercritical fluid through physical foaming, wherein the physically foamed midsole (20) has a second top surface (21) and a second bottom surface (22); a part of the second bottom surface (22) enters the second surface structure (124, 424, 5212) of the second surface (122, 422, 5211) to generate an anchor effect with the mesh layer (12, 42, 52).

2. The shoe component (100, 200, 300) as claimed in claim 1, wherein the mesh layer (12, 42, 52) is a yarn fabric; the first surface structure (123, 423, 5232) is selected from the group consisting of a plurality of high-density pores (123a, 423a, 5232a), a plurality of loops (423b, 5232b), a thermoplastic film (423c), and a combination thereof; the second surface structure (124, 424, 5212) is selected from the group consisting of a plurality of low-density pores (124a, 424a, 5212a), a plurality of loops (424b), and a combination thereof.

3. The shoe component (100, 200, 300) as claimed in claim 2, wherein the plurality of high-density pores (123a, 423a, 5232a) of the first surface (121, 421, 5231) are defined as 70 or more pores per square centimeter; the plurality of low-density pores (124a, 424a, 5212a) of the second surface (122, 422, 5211) are defined as 60 or less pores per square centimeter.

4. The shoe component (100, 200, 300) as claimed in claim 3, wherein the thermoplastic film (423c) is bonded with the mesh layer (12, 42, 52) by heating and softening a thermoplastic film material; a thickness of the thermoplastic film (423c) ranges from 0.05 mm to 1 mm; the first top surface (111, 411, 511) of the base layer (11, 41, 51) is bonded with the thermoplastic film (423c) through heating and melting.

5. The shoe component (100, 200, 300) as claimed in any one of claims 1 and 2, wherein no adhesive layer is provided between the second surface (122, 422, 5211) of the composite outsole (10, 40, 50) and the second bottom surface (22) of the physically foamed midsole (20).

6. The shoe component (100, 200, 300) as claimed in claim 5, further comprising a woven shoe upper (30), wherein the woven shoe upper (30) is engaged with the second top surface (21) of the physically foamed midsole (20); the woven shoe upper (30) has a third bottom surface (31); a part of the second top surface (21) of the physically foamed midsole (20) enters the third bottom surface (31) to generate an anchor effect with the woven shoe upper (30); no adhesive layer is provided between the second top surface (21) and the third bottom surface (31).

7. The shoe component (100, 200, 300) as claimed in claim 1, wherein both the base layer (11, 41, 51) and the physically foamed midsole (20) comprise a first thermoplastic material; the first thermoplastic material is selected from the group consisting of thermoplastic polyurethane (TPU), polyamide, polyester, ionomer, and a combination thereof; the base layer (11, 41, 51) is a foamed body or a non-foamed body; the mesh layer (12, 42, 52) comprises a second thermoplastic material; the second thermoplastic material is selected from the group consisting of polyester, thermoplastic polyurethane (TPU), and a combination thereof.

8. The shoe component (100, 200, 300) as claimed in claim 7, further comprising a woven shoe upper (30), wherein the woven shoe upper (30) is engaged with the second top surface (21) of the physically foamed midsole (20); the woven shoe upper (30) comprises a third thermoplastic material; the third thermoplastic material is selected from the group consisting of polyester, thermoplastic polyurethane (TPU), polyamide, polyethylene terephthalate (PET), and a combination thereof.

9. The shoe component (100, 200, 300) and claimed in claim 8, wherein the mesh layer (12, 42, 52) is made of polyester or thermoplastic polyurethane (TPU); the physically foamed midsole (20) is made of polyester or thermoplastic polyurethane (TPU); the woven shoe upper (30) is made of polyester or thermoplastic polyurethane (TPU); no adhesive layer is provided between the mesh layer (12, 42, 52) and the physically foamed midsole (20) and between the physically foamed midsole (20) and the woven shoe upper (30).

10. The shoe component (100, 200, 300) as claimed in claim 1, wherein the base layer (11, 41, 51) is a thermosetting material; the thermosetting material is selected from the group consisting of thermosetting polyurethane, rubber, and a combination thereof; the base layer (11, 41, 51) is a foamed body or a non-foamed body.

11. A method of manufacturing a shoe component (100, 200, 300) co-molded with a physically foamed midsole, comprising:
step S1: providing a composite outsole (10, 40, 50), wherein a mesh layer (12, 42, 52) of the composite outsole (10, 40, 50) has a first surface (121, 421, 5231) and a second surface (122, 422, 5211) that face opposite directions; the first surface (121, 421, 5231) has a first surface structure (123, 423, 5232); the second surface (122, 422, 5211) has a second surface structure (124, 424, 5212); the first surface structure (123, 423, 5232) is different from the second surface structure (124, 424, 5212); a base layer (11, 41, 51) of the composite outsole (10, 40, 50) is engaged with the first surface (121, 421, 5231) by co-molding;
step S2: placing the composite outsole (10, 40, 50) into a foaming mold (400) and reserving a foaming space (430); injecting a thermoplastic foaming fluid, which comprises a supercritical fluid, into the foaming space (430) of the foaming mold (400), wherein before the thermoplastic foaming fluid is injected into the foaming mold (400), an air pressure in the foaming mold (400), which is preset, ranges from 5 bar to 50 bar; and
step S3: releasing the air pressure in the foaming mold (400) to foam the thermoplastic foaming fluid through the supercritical fluid to form a physically foamed midsole (20), wherein a part of the physically foamed midsole (20) enters the second surface structure (124, 424, 5212) of the second surface (122, 422, 5211) of the mesh layer (12, 42, 52) to generate an anchor effect with the mesh layer (12, 42, 52), thereby obtaining a shoe component (100, 200, 300).

12. The method as claimed in claim 11, wherein the mesh layer (12, 42, 52) is a yarn fabric; the first surface structure (123, 423, 5232) is selected from the group consisting of a plurality of high-density pores (123a, 423a, 5232a), a plurality of loops (423b, 5232b), a thermoplastic film (423c), and a combination thereof; the second surface structure (124, 424, 5212) is selected from the group consisting of a plurality of low-density pores (124a, 424a, 5212a), a plurality of loops (424b), and a combination thereof.

13. The method as claimed in claim 11, wherein in step S1, the composite outsole (10, 40, 50) is provided by placing the mesh layer (12, 42, 52) into an injection mold, injecting an outsole material into the injection mold, and solidifying the outsole material to form the base layer (11, 41, 51) to engage the base layer (11, 41, 51) with the first surface (121, 421, 5231) of the mesh layer (12, 42, 52), thereby obtaining the composite outsole (10, 40, 50).

14. The method as claimed in claim 11, wherein in step S1, the composite outsole (10, 40, 50) is provided by directly printing an outsole material on the first surface (121, 421, 5231) of the mesh layer (12, 42, 52) by using a 3D printing apparatus, and solidifying the outsole material to form the base layer (11, 41, 51) to engage the base layer (11, 41, 51) with the mesh layer (12, 42, 52), thereby obtaining the composite outsole (10, 40, 50).

15. The method as claimed in any one of claims 11, 12, and 13, wherein in step S2, a woven shoe upper (30), which fits around a last (4201) in advance, is placed into the foaming mold (400) and the composite outsole (10, 40, 50) is placed in a bottom cavity of the foaming mold (400); when the foaming mold (400) is activated to close, a third bottom surface (31) of the woven shoe upper (30) faces the second surface (122, 422, 5211) of the composite outsole (10, 40, 50), and the foaming space (430) is formed between the woven shoe upper (30) and the composite outsole (10, 40, 50).
